# EUROPÄISCHE PATENTANMELDUNG

(11) **EP 2 390 039 A1**
(43) Veröffentlichungstag der Anmeldung: **30.11.2011**
(21) Anmeldenummer: 10164423.5
(22) Anmeldetag: 31.05.2010
(51) Int. Cl.: B23K 9/028, B23K 9/173, B23K 9/29, B23K 37/02, B23K 37/053, F22B 37/00, F22B 37/10

(54) **Vorrichtung zum stoffschlüssigen Verbinden eines Einbaukörpers in ein Dampferzeugerrohr mit einer exzentrisch bezüglich der Mittelachse des Brennerrohrs angeordneten Schweissdrahtdüse**

(71) Anmelder: SIEMENS AKTIENGESELLSCHAFT, 80333 München (DE)
(72) Erfinder: Franke, Dr. Joachim, 90403, Nürnberg (DE); Brückner, Jan, 91080, Uttenreuth (DE); Effert, Martin, 91058, Erlangen (DE)

(57) **Zusammenfassung**

Eine Vorrichtung zum stoffschlüssigen Verbinden eines Einbaukörpers in ein Dampferzeugerrohr (14) soll einen technisch besonders einfachen Herstellungsprozess und eine besonders geringe Reparaturanfälligkeit des so hergestellten Dampferzeugerrohrs (14) ermöglichen. Dazu umfasst die Vorrichtung eine Schweißvorrichtung, umfassend eine Schweißdrahtzuführeinrichtung und eine Schweißgaszuführeinrichtung, sowie einen Brennerkopf (12), wobei mit dem Brennerkopf (12) ein Brennerrohr (8) starr verbunden ist und eine Schweißdrahtdüse (16) des Brennerkopfs (12) exzentrisch bezüglich der Mittelachse (18) des Brennerrohrs (8) angeordnet ist.

## Beschreibung

Vorrichtung zum stoffschlüssigen Verbinden eines Einbaukörpers in ein Dampferzeugerrohr

Die Erfindung betrifft eine Vorrichtung zum stoffschlüssigen Verbinden eines Einbaukörpers in ein Dampferzeugerrohr.

Ein Dampferzeuger ist ein geschlossenes, beheiztes Gefäß oder ein Druckrohrsystem, das dem Zweck dient, Dampf von hohem Druck und hoher Temperatur für Heiz- und Betriebszwecke (z. B. zum Betrieb einer Dampfturbine) zu erzeugen. Bei besonders hohen Dampfleistungen und -drücken wie beispielsweise bei der Energieerzeugung in Kraftwerken werden dabei Wasserrohrkessel eingesetzt, bei denen sich das Strömungsmedium - üblicherweise Wasser - in Dampferzeugerrohren befindet. Auch bei der Feststoffverbrennung kommen Wasserrohrkessel zum Einsatz, da die Brennkammer, in der die Wärmeerzeugung durch Verbrennung des jeweiligen Rohstoffes erfolgt, beliebig durch die Anordnung von Rohrwänden gestaltet werden kann.

Ein derartiger Dampferzeuger in der Bauart eines Wasserrohrkessels umfasst somit eine Brennkammer, deren Umfassungswand zumindest teilweise aus Rohrwänden, d. h. gasdicht verschweißten Dampferzeugerrohren gebildet ist. Strömungsmediumsseitig bilden diese Dampferzeugerrohre als Verdampferheizflächen zunächst einen Verdampfer, in den unverdampftes Medium eingeleitet und verdampft wird. Der Verdampfer ist dabei üblicherweise im heißesten Bereich der Brennkammer angeordnet. Ihm ist strömungsmediumsseitig gegebenenfalls eine Einrichtung zum Abscheiden von Wasser und Dampf und ein Überhitzer nachgeschaltet, in dem der Dampf über seine Verdampfungstemperatur hinaus weiter erhitzt wird, um in einer folgenden Wärmekraftmaschine wie z. B. einer Dampfturbine einen hohen Wirkungsgrad zu erzielen. Dem Verdampfer kann strömungsmediumsseitig ein Vorwärmer (ein so genannter Economiser) vorgeschaltet sein, der das Speisewasser unter Ausnutzung von Ab-oder Restwärme vorwärmt und so ebenfalls den Wirkungsgrad der Gesamtanlage erhöht.

Für Verdampferheizflächen in Dampferzeugern werden Glattrohre oder innenberippte Rohre eingesetzt. Innenberippte Rohre kommen dann zur Anwendung, wenn der Strömung des Strömungsmediums in den Dampferzeugerrohren ein Drall aufgezwungen werden soll, welcher eine höhere Geschwindigkeit des Fluids an der Innenfläche der Dampferzeugerrohre bewirkt. Der Einsatz von innenberippten Rohren kann dabei aus verschiedenen Gründen erforderlich werden, so z. B. bei einer niedrigen Massenstromdichte des Verdampfers unter Volllast. Auch bei hohen Wärmestromdichten kann die Verwendung von innenberippten Rohren erforderlich sein (z. B. in Trommelkesseln): Hier besteht die Gefahr von Filmsieden, d. h., es bildet sich auf der Innenseite der Dampferzeugerrohre ein Dampffilm, der im Gegensatz zur gut durchmischten Flüssigkeit beim Blasensieden eine hohe wärmeisolierende Wirkung hat. Dies hat zur Folge, dass bei gleich bleibender Wärmestromdichte die Wandtemperatur stark ansteigen kann, was zur Zerstörung der Heizflächen führen kann. Nicht zuletzt kann durch innenberippte Rohre eine Strömungsschichtung (Trennung der Wasser- und Dampfphase) im normalen Lastbetrieb vermieden werden (so z. B. bei Mindestlast in spiralberohrten Dampferzeugern).

Die Innenberippung der Rohre wird nach dem Stand der Technik in einem Kaltziehprozess hergestellt. Nach heutigem Kenntnisstand können innenberippte Rohre nur mit Materialien mit einem maximalen Chromgehalt von 5 % hergestellt werden. Wird der Einsatz von innenberippten Rohren aus höher mit Chrom legierten Stählen erforderlich, so z. B. durch einen weiteren Anstieg der Dampfparameter zur Erhöhung des Wirkungsgrades, so können die innenberippten Rohre mit den heute verfügbaren Prozessen nicht hergestellt werden. In diesem Fall können Glattrohre separat mit entsprechenden drallerzeugenden Einbaukörpern versehen werden. Diese Einbaukörper können unabhängig von den Glattrohren und somit auch aus einem unterschiedlichen Material hergestellt werden.

Der Erfindung liegt nunmehr die Aufgabe zu Grunde, eine Vorrichtung zum stoffschlüssigen Verbinden eines Einbaukörpers in ein Dampferzeugerrohr anzugeben, welche einen technisch besonders einfachen Herstellungsprozess und eine besonders geringe Reparaturanfälligkeit des so hergestellten Dampferzeugerrohrs ermöglicht.

Diese Aufgabe wird erfindungsgemäß gelöst, indem die Vorrichtung eine Schweißvorrichtung, umfassend eine Schweißdrahtzuführeinrichtung und eine Schweißgaszuführeinrichtung, sowie einen Brennerkopf umfasst, wobei mit dem Brennerkopf ein Brennerrohr starr verbunden ist und eine Schweißdrahtdüse des Brennerkopfs exzentrisch bezüglich der Mittelachse des Brennerrohrs angeordnet ist.

Die Erfindung geht dabei von der Überlegung aus, dass eine besonders geringe Reparaturanfälligkeit eines Dampferzeugerrohrs mit einem Einbaukörper insbesondere dadurch erreicht werden könnte, indem dafür gesorgt wird, dass auch im Kraftwerksbetrieb der Einbaukörper über die gesamte Lebensdauer des Heizflächerohres seine Position behält. Dazu sollte eine zusätzliche Fixierung des Einbaukörpers im Dampferzeugerrohr vorgesehen werden. Für eine besonders sichere Verbindung sollten Dampferzeugerrohr und Einbaukörper mittels Schweißen verbunden werden. Dabei sind jedoch die aufgrund der Einbausituation beengten Platzverhältnisse im Dampferzeugerrohr zu berücksichtigen. Schweißdraht- und Schweißgaszuführeinrichtung in der Schweißvorrichtung sollten außerhalb angeordnet werden, während der die Schweißdrahtdüse der Schweißvorrichtung Schweißpunkte im Inneren des Dampferzeugerrohrs erreichen können sollte. Dies ist erreichbar, indem mit dem Brennerkopf ein Brennerrohr starr verbunden ist und die Schweißdrahtdüse exzentrisch bezüglich der Mittelachse des Brennerrohrs angeordnet ist.

Durch die oben vorgeschlagene Ausführung der Vorrichtung kann der Brennerkopf mittels des Brennerrohrs in das Dampferzeugerrohr mit dem Einbaukörper eingeführt werden und so diese miteinander verschweißen. Damit der Brennerkopf über die gesamte Länge des Dampferzeugerrohres Schweißpunkte erreichen kann, sollte die Länge des Brennerrohrs ausreichend gewählt werden. Dazu hat das Brennerrohr vorteilhafterweise mindestens die Hälfte der Länge des zu bearbeitenden Dampferzeugerrohrs. Bei einer Bearbeitung von beiden Seiten des Dampferzeugers können so alle Punkte bis zur Mitte des Dampferzeugerrohrs erreicht werden. Soll die Bearbeitung schneller erfolgen, d. h. nur von einer Seite des Dampferzeugerrohrs, so sollte die Länge des Brennerrohrs entsprechend länger gewählt werden, d. h. in etwa der Länge des zu bearbeitenden Dampferzeugerrohrs entsprechen. Alternativ kann mit zwei Schweißvorrichtungen von beiden Seiten des Rohres gleichzeitig geschweißt werden.

Für den Schweißprozess müssen Schweißdraht und Schweißgas von den entsprechenden Zuführeinrichtungen permanent dem Brennerkopf zugeführt werden. Um dabei aufgrund der beengten Platzverhältnisse im Dampferzeugerrohr keine zusätzlichen Zufuhrleitungen erforderlich zu machen sollten in vorteilhafter Ausgestaltung Schweißdraht und Schweißgas von der Schweißvorrichtung zum Brennerkopf durch das Brennerrohr geführt sein. Dadurch ist eine besonders Platz sparende und technisch einfache Konstruktion der Schweißvorrichtung möglich.

Ein besonders einfacher Schweißprozess ist dadurch erreichbar, dass das Dampferzeugerrohr während des Prozesses stabil gelagert wird. Damit der Brennerkopf dennoch jeden Punkt im Dampferzeugerrohr zum Verschweißen erreichen kann, ist der Brennerkopf vorteilhafterweise um die Mittelachse des Brennerrohrs drehbar gelagert. Dadurch können Schweißpunkte in jedem Raumwinkel erreicht werden.

Um auch in axialer Richtung entlang des Dampferzeugerrohres eine Erreichbarkeit von Schweißpunkten zu gewährleisten, sind in vorteilhafter Ausgestaltung Schweißvorrichtung und/oder Brennerrohr und Brennerkopf entlang der Mittelachse des Brennerrohrs beweglich gelagert. Eine derartige Lagerung kann beispielsweise auf Führungsschienen erfolgen, wobei der am starren Brennerrohr montierte Brenner gegebenenfalls gemeinsam mit den Zuführeinrichtungen über einen Antrieb verschoben wird. Dadurch ist ein besonders einfacher Schweißprozess möglich.

Um insbesondere bei besonders großen Längen von Brennerrohr und Dampferzeugerrohr eine unzulässige Durchbiegung zu verhindern, ist vorteilhafterweise am Brennerrohr und/oder an einer Führungsschiene eine Mehrzahl von Führungselementen angeordnet. Diese Führungselemente dienen als Stütze für das Brennerrohr, so dass eventuelle Beschädigungen von Einbaukörper oder Brennerrohr sicher vermieden werden.

Um dabei insbesondere bei Schweißpunkten in unterschiedlichen Raumwinkeln innerhalb des Dampferzeugerrohrs eine gute Erreichbarkeit zu gewährleisten, sind die Führungselemente vorteilhafterweise derart angeordnet, dass die Mittelachse des Brennerrohrs und die Mittelachse des zu bearbeitenden Dampferzeugerrohrs im wesentlichen zusammenfallen. Auf diese Weise wird stets eine Zentrierung des Brennerrohrs innerhalb des Dampferzeugerrohrs gewährleistet, so dass die Spitze des Brennerkopfs in jedem Raumwinkel die Innenwand des Dampferzeugerrohrs mit dem Einbaukörper erreicht.

In vorteilhafter Ausgestaltung kommt eine derartige Vorrichtung bei einem Verfahren zum stoffschlüssigen Verbinden eines Einbaukörpers in einem Dampferzeugerrohr, bei dem der Einbaukörper an mindestens einer Stelle mit dem Dampferzeugerrohr verschweißt wird, zum Einsatz.

In vorteilhafter Ausgestaltung kommt ein nach einem solchen Verfahren hergestelltes Dampferzeugerrohr in einem Dampferzeuger zum Einsatz.

Die mit der Erfindung erzielten Vorteile bestehen insbesondere darin, dass die Fixierung eines Einbaukörpers in einem Dampferzeugerrohr durch Schweißen auch bei den dort entsprechenden beengten Platzverhältnissen ermöglicht wird. Durch das Verschweißen des Einbaukörpers im Dampferzeugerrohr wird seine Position auch über die gesamte Lebensdauer eines Heizflächenrohres gesichert und dadurch eine besonders geringe Reparaturanfälligkeit erreicht. Mit der beschriebenen Schweißvorrichtung können an beliebigen Stellen im Rohr der Einbaukörper und das Heizflächenrohr verschweißt werden.

Die Erfindung wird anhand einer Zeichnung näher erläutert. Darin zeigen:
- FIG 1: eine Vorrichtung zum stoffschlüssigen Verbinden eines Einbaukörpers in ein Dampferzeugerrohr,
- FIG 2: einen in einem Dampferzeugerrohr geführten Brennerkopf, und
- FIG 3: schematisch einen Durchlaufdampferzeuger in stehender Bauweise.

Gleiche Teile sind in allen Figuren mit denselben Bezugszeichen versehen.

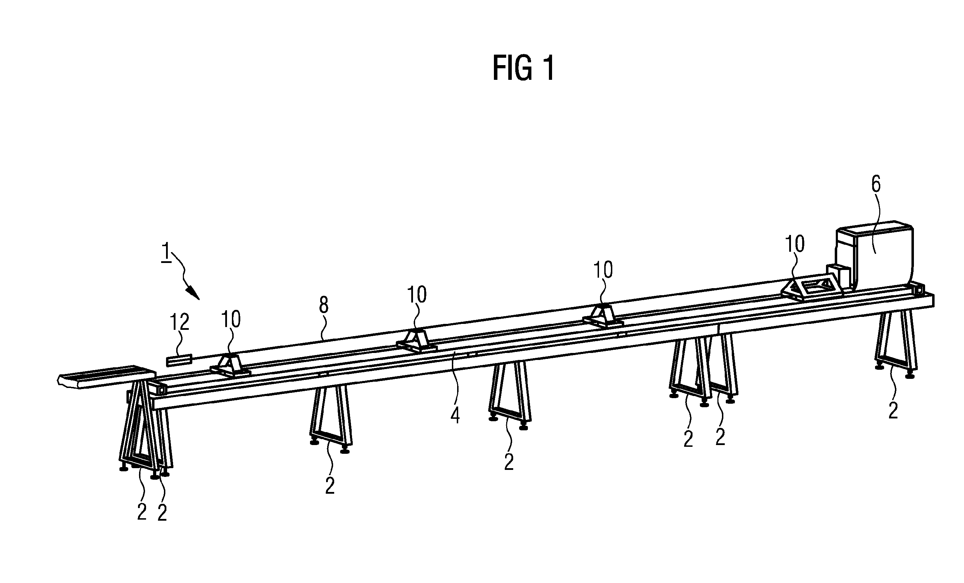

FIG 1 zeigt eine Vorrichtung 1 gemäß der Erfindung mit einer auf Standfüßen 2 angeordneten Führungsschiene 4. Auf der Führungsschiene 4 ist eine Schweißvorrichtung 6 angeordnet, welche eine nicht näher dargestellte Drahtzuführeinrichtung für einen Schweißdraht sowie eine Schutzgaszuführungseinrichtung umfasst. An die Schweißvorrichtung 6 schließt sich ein Brennerrohr 8 an, welches auf Führungselementen 10 auf der Führungsschiene 4 gelagert ist. Die Führungselemente 10 verhindern dabei ein unzulässiges Durchbiegen des Brennerrohrs 8, das mindestens die halbe Länge des zu bearbeitenden Dampferzeugerrohrs haben sollte, typischerweise aber bis zu 15 m messen kann. Durch das Brennerrohr 8 werden Schutzgas und Schweißdraht zu dem an dessen der Schweißvorrichtung 6 gegenüberliegenden Ende angeordneten Brennerkopf 12 geleitet.

Schweißvorrichtung 6, Brennerrohr 8 und Brennerkopf 12 sind auf der Führungsschiene 4 durch eine nicht näher gezeigte Antriebsvorrichtung entlang der Führungsschiene 4 bewegbar. Dadurch kann der Brennerkopf 12 in ein Dampferzeugerrohr eingeführt werden und dort der Schweißvorgang trotz der beengten Platzverhältnisse durchgeführt werden.

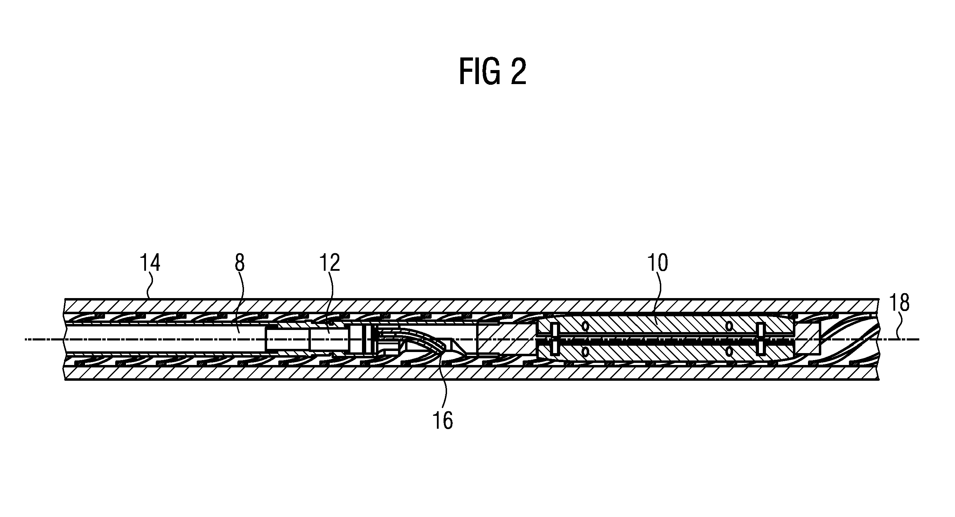

Der in ein Dampferzeugerrohr 14 eingeführte Brennerkopf 12 ist im Schnitt in FIG 2 dargestellt. Auch hier sind Führungselemente 10 angeordnet, die eine Zentrierung des Brennerrohrs 8 im Dampferzeugerrohr 14 bewirken. Die Schweißdrahtdüse 16 des Brennerkopfs 12 ist exzentrisch bezüglich der Mittelachse 18 des Brennerrohrs 8 angeordnet. Der Brennerkopf 12 ist auch um die Mittelachse 18 drehbar gelagert, so dass auch in jedem Winkel des Dampferzeugerrohrs 14 der Einbaukörper verschweißt werden kann.

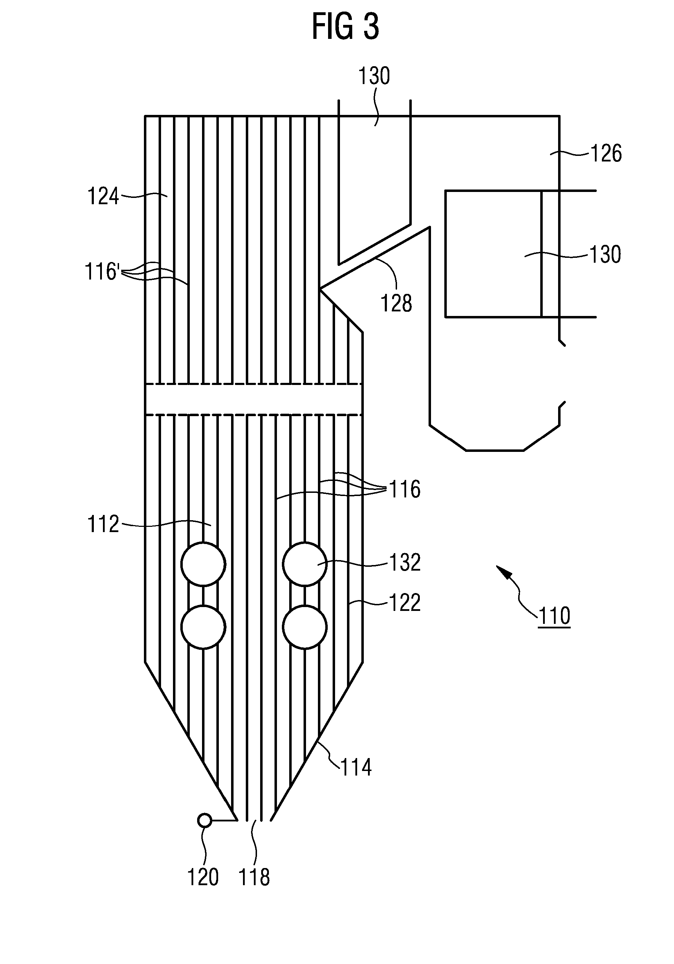

Der Durchlaufdampferzeuger 110 gemäß FIG 3 ist in stehender Bauweise und als Zweizugdampferzeuger ausgeführt. Er weist eine Umfassungswand 112 auf, die am Unterende des durch sie gebildeten ersten Gaszugs in einen Trichter 114 übergeht. Die Umfassungswand 112 ist in einem unteren Bereich oder Verdampferbereich aus Verdampferrohren 116 und in einem oberen Bereich oder Überhitzerbereich aus Überhitzerrohren 116' aufgebaut. Die Verdampferrohre 116 bzw. die Überhitzerrohre 116' sind an ihren Längsseiten gasdicht miteinander verbunden, beispielsweise verschweißt. Der Boden 114 umfasst eine nicht näher dargestellte Austragsöffnung 118 für Asche.

Die von einem Strömungsmedium, insbesondere von Wasser oder einem Wasser-Dampf-Gemisch, von unten nach oben durchströmbaren Verdampferrohre 116 der Umfassungswand 112 sind mit ihren Eintrittsenden an einen Eintrittssammler 120 angeschlossen. Austrittsseitig sind die Verdampferrohre 116 über ein nich näher gezeigtes Wasserabscheidesystem an die strömungsmediumsseitig nachfolgenden Überhitzerrohre 116' angeschlossen.

Die Verdampferrohre 116 der Umfassungswand 112 bilden in dem sich zwischen dem Eintrittssammler 120 und dem Wasserabscheidesystem befindenden Abschnitt des Gaszugs eine Verdampferheizfläche 122. An diese schließt sich eine von den Überhitzerrohren 116' gebildete Nach- oder Überhitzerheizfläche 124 an. Zusätzlich sind im zweiten, von den Heizgasen abwärts durchströmten Gaszug 126 und in dem diesen heizgasseitig mit dem ersten Gaszug verbindenden Querzug 128 noch weitere, lediglich schematisch dargestellte Heizflächen 130, beispielsweise ein Economizer und konvektive Überhitzerheizflächen, angeordnet.

Im unteren Bereich der Umfassungswand 112 ist eine Anzahl von Brennern für einen fossilen Brennstoff in jeweils einer Öffnung 132 der Umfassungswand 112 angebracht. In FIG 3 sind vier Öffnungen 132 sichtbar. An einer derartigen Öffnung 132 sind die Verdampferrohre 116 der Umfassungswand 112 zur Umgehung der jeweiligen Öffnung 132 gekrümmt und verlaufen auf der Außenseite des vertikalen Gaszugs. Diese Öffnungen können beispielsweise auch für Luftdüsen vorgesehen sein.

Durch die Verwendung von innenberippten Dampferzeugerrohren, bei denen der Einbaukörper mittels der Vorrichtung 1 verschweißt wurde, ist der Dampferzeuger 110 besonders reparaturunanfällig. Weiterhin können durch die Verwendung von Einbaukörpern auch solche Dampferzeugerrohre aus Stählen mit einem Chromgehalt von mehr als 5 % verwendet werden. Derartige Dampferzeugerrohre sind für besonders hohe Dampfparameter geeignet und ermöglichen so einen besonders hohen Wirkungsgrad eines Dampferzeugers.

## Patentansprüche

1. Vorrichtung (1) zum stoffschlüssigen Verbinden eines Einbaukörpers in ein Dampferzeugerrohr (14) mit einer Schweißvorrichtung (6), umfassend eine Schweißdrahtzuführeinrichtung und eine Schweißgaszuführeinrichtung, sowie einen Brennerkopf (12), wobei mit dem Brennerkopf (12) ein Brennerrohr (8) starr verbunden ist und eine Schweißdrahtdüse (16) des Brennerkopfs (12) exzentrisch bezüglich der Mittelachse (18) des Brennerrohrs (8) angeordnet ist.

2. Vorrichtung (1) nach Anspruch 1, bei der das Brennerrohr (8) mindestens die Hälfte der Länge des zu bearbeitenden Dampferzeugerrohrs (14) hat.

3. Vorrichtung (1) nach einem der vorhergehenden Ansprüche, bei der Schweißdraht und Schweißgas von der Schweißvorrichtung (6) zum Brennerkopf (12) durch das Brennerrohr (8) geführt sind.

4. Vorrichtung (1) nach einem der vorhergehenden Ansprüche, bei der der Brennerkopf (12) um die Mittelachse (18) des Brennerrohrs (8) drehbar gelagert ist.

5. Vorrichtung (1) nach einem der vorhergehenden Ansprüche, bei der Schweißvorrichtung (6) und/oder Brennerrohr (8) und Brennerkopf (12) entlang der Mittelachse (18) des Brennerrohrs (8) beweglich gelagert sind.

6. Vorrichtung (1) nach einem vorhergehenden Ansprüche, bei der am Brennerrohr (8) und/oder an einer Führungsschiene (4) eine Mehrzahl von Führungselementen (10) angeordnet ist.

7. Vorrichtung (1) nach Anspruch 6, bei der die Führungselemente (10) derart angeordnet sind, dass die Mittelachse (18) des Brennerrohrs (8) und die Mittelachse des zu bearbeitenden Dampferzeugerrohrs (14) im wesentlichen zusammenfallen.

8. Verfahren zum stoffschlüssigen Verbinden eines Einbaukörpers in einem Dampferzeugerrohr (14), bei dem der Einbaukörper an mindestens einer Stelle mit dem Dampferzeugerrohr (14) mit einer Vorrichtung (1) nach einem der vorhergehenden Ansprüche verschweißt wird.

9. Dampferzeugerrohr (14) mit einem Einbaukörper, hergestellt mit dem Verfahren nach Anspruch 8.

10. Dampferzeuger (110) mit einem Dampferzeugerrohr nach Anspruch 9.
